# EUROPEAN PATENT APPLICATION

(11) **EP 4 603 959 A1**
(43) Date of publication of application: **20.08.2025**
(21) Application number: 23887459.8
(22) Date of filing: 19.06.2023
(51) Int. Cl.: G06F 3/06

(54) **DATA ACCESS METHOD AND APPARATUS, AND DEVICE**

(30) Priority: 07.11.2022 CN 202211386991; 17.01.2023 CN 202310094863
(71) Applicant: Huawei Technologies Co., Ltd., Shenzhen, Guangdong 518129 (CN)
(72) Inventor: GEORGE, Rojin, Shenzhen, Guangdong 518129 (CN); MATHUR, Ankit, Shenzhen, Guangdong 518129 (CN); ZHANG, Mingqian, Shenzhen, Guangdong 518129 (CN)
(74) Representative: Grünecker Patent- und Rechtsanwälte PartG mbB
(86) International application number: PCT/CN2023/101128
(87) International publication number: WO 2024/098762

(57) **Abstract**

A data access method includes: A target storage device (120) receives a file access request sent by a client (110), where the file access request includes a first handle, and a source file identified by the first handle is not located in the target storage device (120). The target storage device (120) queries a handle mapping list for a second handle corresponding to the first handle, and accesses a target file identified by the second handle, where the target file is located in the target storage device (120). When the method is used to perform data migration, a service does not need to be restarted, so that service continuity can be improved.

## Description

This application claims priorities to Chinese Patent Application No. 202211386991.2, filed with the China National Intellectual Property Administration on November 7, 2022 and entitled "DATA MIGRATION METHOD", and to Chinese Patent Application No. 202310094863.9, filed with the China National Intellectual Property Administration on January 17, 2023 and entitled "DATA ACCESS METHOD AND APPARATUS, AND DEVICE", both of which are incorporated herein by reference in their entireties.

### TECHNICAL FIELD

This application relates to the field of computer technologies, and specifically, to a data access method and apparatus, and a device.

### BACKGROUND

A network attached storage (NAS) device is a storage device located in a network, and may provide, through the network, a data storage service, for example, file sharing and data backup, for a computer that serves as a client (client). The network attached storage device implements centralized data storage and management, and reduces pressure of local data storage of the client. Therefore, the NAS device is increasingly widely used.

The client needs to access data in the NAS device to execute a service. In some cases, data stored in a NAS device needs to be migrated to another NAS device. In a current data migration solution, the service of the client needs to be restarted, causing poor service continuity.

### SUMMARY

A data access method and apparatus, and a device are provided, to improve service continuity.

According to a first aspect, a data access method is provided. The method includes: A target storage device receives a file access request sent by a client, where the file access request includes a first handle, and a source file identified by the first handle is not located in the target storage device. The target storage device queries a handle mapping list for a second handle corresponding to the first handle, and accesses a target file identified by the second handle, where the target file is located in the target storage device.

A handle is a file handle (file handle), and is an identifier for identifying and accessing a file. Handles of different files are different. When a file is copied, a handle of the copied file is different from that of a file obtained through copying. File handles of a same file in different devices are also different. In other words, even if content and other features of two files are the same, handles of the two files are different as long as the two files are located in different devices.

The target file identified by the second handle is obtained by copying the source file identified by the first handle. In other words, the target file identified by the second handle is a copy of the source file identified by the first sentence handle. The target file identified by the second handle may also be referred to as a copy file of the source file identified by the first handle. In a data migration scenario (to be specific, the file is migrated or copied from one device to another device), the target file identified by the second handle is a file generated by copying the source file identified by the first handle to the target storage device. Specifically, during data migration, the source file is copied to obtain the target file, and the target file is migrated to the target storage device. The second handle is an identifier allocated by the target storage device to the target file when the target file is migrated to the target storage device. The target storage device may identify and access the target file based on the second handle.

For the client, in a solution in a conventional technology, after the client is connected to the target storage device, to obtain a file handle of the file in the target storage device, a service needs to be restarted (the client is restarted, or the client restarts an application), to delete a file handle of the source file and apply to the target storage device for a file handle of the target file, so that the file access request is sent based on a file handle allocated by the target storage device to the file, to implement access to the file. Service restart interrupts the service. That is, service continuity is poor. In addition, applying for the file handle also consumes time. This further reduces the service continuity.

In the method provided in this embodiment of this application, after the client is connected to the target storage device, the client still sends the file access request based on the file handle of the source file, that is, a handle of the file in a device in which the source file is located, to implement access to the file. Therefore, in the method, the client does not need to restart the service, and the service may not be interrupted. In addition, in the method, the client does not need to apply to the target storage device for the file handle of the file in the target storage device, so that the service continuity is further ensured, and even the client does not perceive that an actual handle of the accessed file is different from the file access request.

When receiving the file access request, the target storage device may query for a handle corresponding to the file handle of the source file, where a found file handle is the file handle that is of the target file and that is obtained by copying the source file; and may further access the target file based on the found file handle. The target file is the copy file of the source file, and access to the target file is equivalent to access to the source file, so that a data requirement of the client is met.

In short, according to the data access method provided in this embodiment of this application, in the data migration scenario, the data requirement of the client is met, and in addition, the service continuity is ensured.

In a possible implementation, the first handle is an identifier of the target file in another storage device before the target file is copied to the target storage device.

The target file is obtained by copying the source file identified by the first handle, and it may be considered that the target file and the source file are a same file. As described above, the file handles of the same file in different devices are different. Therefore, the first handle may be referred to as the identifier of the target file in another device before the target file is copied to the target storage device, and the second handle is an identifier of the target file in the target storage device.

In a possible implementation, the method further includes: When an exception occurs in the access to the target file, the target storage device forwards the access request to a source storage device in which the source file is located, to access the source file.

In this implementation, when the target storage device cannot normally access the target file, the target storage device may forward the file access request of the client to the source storage device in which the source file is located, so that the source storage device accesses the source file, to meet the data requirement of the client. The first handle in the file access request is originally a file handle in the source storage device. The source storage device may access the file in time based on the first handle, and there is an extremely low probability that an access exception occurs. Therefore, when a storage device connected to the client is switched to the target storage device, and the target storage device cannot normally access the file, the data requirement of the client can also be met in time, to ensure the service continuity.

In a possible implementation, a device address of the target storage device is the same as a device address of a source storage device in which the source file is located, and the device address is used for access by the client. Before the target storage device receives the file access request, the method further includes: enabling the device address of the target storage device; and disabling the device address of the source storage device.

A device address used by the target storage device to connect to the client is the same as a device address used by the source storage device to connect to the client. When the storage device connected to the client is switched from the source storage device to the target storage device, the device address of the source storage device is disabled, and the device address of the target storage device is enabled, to complete switching. It is easy to operate. In addition, for the client, a device address connected to the client remains unchanged, and a network connection does not need to be re-established. In other words, when the storage device is switched, the client does not need to be re-mounted, to reduce cutover duration, and further ensure continuity of the service executed by the client.

In a possible implementation, when the target storage device is faulty, the method further includes: disabling the device address of the target storage device; and re-enabling the device address of the source storage device.

In this implementation, when the target storage device is faulty, the storage device connected to the client may be switched to the source storage device, so that the source storage device continues to provide a data service for the client. The client may send the file access request to the source storage device, and the source storage device accesses the source file, to meet the data requirement of the client. The first handle in the file access request is originally a file handle in the source storage device. The source storage device may access the file in time based on the first handle, and there is an extremely low probability that an access exception occurs. Therefore, when the storage device connected to the client is switched to the target storage device, and the target storage device is faulty, the data requirement of the client can also be met in time, to ensure the service continuity.

In a possible implementation, the method further includes: When an exception occurs in the access to the target file, the target storage device disables the device address of the target storage device; and re-enables the device address of the source storage device.

In this implementation, when the target storage device cannot normally access the target file, the storage device connected to the client may be switched to the source storage device, so that the source storage device continues to provide a data service for the client. The client may send the file access request to the source storage device, and the source storage device accesses the source file, to meet the data requirement of the client. The first handle in the file access request is originally a file handle in the source storage device. The source storage device may access the file in time based on the first handle, and there is an extremely low probability that an access exception occurs. Therefore, when the target storage device cannot normally access the file, and the storage device connected to the source storage device is switched back to the source storage device, the data requirement of the client can also be met in time, to ensure the service continuity.

In a possible implementation, the method further includes: when the second handle does not exist in the handle mapping list, sending a copy request to the source storage device in which the source file is located, where the copy request includes the first handle, and the copy request is used to request the source storage device to copy the source file to the target storage device.

In this implementation, if the second handle corresponding to the first handle does not exist in the handle mapping list, the source file has not been copied to the target storage device. In this case, the target storage device may specially send the copy request to the source storage device, to indicate the source storage device to copy the source file to the target storage device, so that the source file does not need to be copied to the target storage device in a specified data migration sequence, and the source file may be preferentially copied to the target storage device. In this way, the target storage device can obtain the copy file, namely, the target file, of the source file in time, to implement timely access to the target file and ensure the service continuity.

In a possible implementation, the source file that is identified by the first handle and that is located in the source storage device is in a locked state. The method further includes: The target storage device sets the target file identified by the second handle to be in a locked state, where an owner of access permission for the target file in the locked state is consistent with an owner of access permission for the source file in the locked state.

In this implementation, after the file is copied from a source storage device to the target storage device, a locked state of the file may be further synchronized, so that re-applying for locking does not need to be performed for the file copied to the target storage device, to save time for re-applying for locking, and further ensure the service continuity.

In a possible implementation, that the target storage device sets the target file to be in the locked state includes: The target storage device obtains lock information generated when the source file enters the locked state; and the target storage device sets, based on the lock information, the target file to enter the locked state.

In this implementation, the target storage device may directly use the lock information of the source file to lock the target file, so that locking does not need to be re-applied for, to save the time for applying for locking, and further ensure the service continuity.

In a possible implementation, the method further includes: when it is detected that a client that triggers the source file to enter the locked state is consistent with the client that sends the access request, determining that the access to the target file is authorized.

In this implementation, whether the access to the target file is authorized may be determined by detecting whether the client that triggers the source file to be locked is consistent with the client that sends the access request. The access is determined to be authorized only when it is detected that the client that triggers the source file to be locked is consistent with the client that sends the access request, so that unauthorized access to the file can be avoided, and data security is ensured.

According to a second aspect, a data access apparatus is provided, disposed in a target storage device. The apparatus includes: a receiving unit, configured to receive a file access request sent by a client, where the file access request includes a first handle, and a source file identified by the first handle is not located in the target storage device; and an access unit, configured to: query a handle mapping list for a second handle corresponding to the first handle, and access a target file identified by the second handle, where the target file is located in the target storage device.

In a possible implementation, the apparatus further includes: a sending unit, configured to: when an exception occurs in access to the target file, forward the access request to a source storage device in which the source file is located, to access the source file.

In a possible implementation, a device address of the target storage device is the same as a device address of a source storage device in which the source file is located, and the device address is used for access by the client. The apparatus further includes: an enabling unit, configured to enable the device address of the target storage device.

In a possible implementation, the apparatus further includes: a disabling unit, configured to: when the target storage device is faulty, disable the device address of the target storage device.

In a possible implementation, the apparatus further includes: a disabling unit, configured to: when an exception occurs in access to the target file, disable the device address of the target storage device.

In a possible implementation, the apparatus further includes: the sending unit, configured to: when the second handle does not exist in the handle mapping list, send a copy request to the source storage device in which the source file is located, where the copy request includes the first handle, and the copy request is used to request the source storage device to copy the source file to the target storage device.

In a possible implementation, the source file that is identified by the first handle and that is located in the source storage device is in a locked state. The apparatus further includes: a setting unit, configured to set the target file identified by the second handle to be in a locked state, where an owner of access permission for the target file in the locked state is consistent with an owner of access permission for the source file in the locked state.

According to a third aspect, a computer is provided, including: a memory, configured to store an executable program; and a processor, configured to run the executable program to perform the first aspect.

According to a fourth aspect, a computer-readable storage medium is provided, including computer program instructions. When the computer program instructions are executed by a computing device, the computing device performs the method provided in the first aspect.

According to a fifth aspect, a computer program product including instructions is provided. When the instructions are run by a computer device, the computer device is enabled to perform the method provided in the first aspect.

For beneficial effects of the second aspect to the fifth aspect, refer to the foregoing descriptions of beneficial effects of the first aspect. Details are not described herein again.

### BRIEF DESCRIPTION OF DRAWINGS

FIG. 1 is a diagram of an architecture of a system according to an embodiment of this application;
FIG. 2 is a diagram of a software structure of a target storage device according to an embodiment of this application;
FIG. 3 is a flowchart of a data access method according to an embodiment of this application;
FIG. 4 is a diagram of an effect of a data access method according to an embodiment of this application;
FIG. 5 is a flowchart of a data access method according to an embodiment of this application;
FIG. 6 is a diagram of a structure of a data access apparatus according to an embodiment of this application; and
FIG. 7 is a diagram of a structure of a computing device according to an embodiment of this application.

### DESCRIPTION OF EMBODIMENTS

The following describes technical solutions in embodiments of the present invention with reference to accompanying drawings. It is clear that the described embodiments are merely a part of but not all of embodiments of this application.

In the descriptions of this specification, "an embodiment", "some embodiments", or the like indicates that one or more embodiments of this specification include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

In the descriptions of this specification, "/" means "or" unless otherwise specified. For example, A/B may represent A or B. In the specification, "and/or" describes only an association relationship between associated objects and represents that three relationships may exist. For example, A and/or B may represent the following three cases: Only A exists, both A and B exist, and only B exists. In addition, in the descriptions in embodiments of this specification, "a plurality of" means two or more than two.

In the descriptions of this specification, the terms "first" and "second" are merely intended for description, and shall not be understood as an indication or implication of relative importance or an implicit indication of a quantity of indicated technical features. Therefore, a feature limited by "first" or "second" may explicitly or implicitly include one or more features. The terms "comprise", "include", "have", and their variants all mean "include but are not limited to", unless otherwise specifically emphasized in another manner.

With development of communication technologies, a computing system using a decoupled storage and compute architecture becomes possible. In the decoupled storage and compute architecture, data is stored in a NAS device. When executing a service, a client may read or write data from/into the NAS device, so that the service can be executed. Based on the decoupled storage and compute architecture, a cloud service provider can provide a data storage service externally. A tenant that uses the data storage service can store data to a NAS device of the cloud service provider via a network, to reduce data storage costs of the tenant.

In some scenarios, for example, when a NAS device with high storage performance is used to replace an original NAS device with low storage performance, or when the cloud service provider is changed, data in a source NAS device needs to be migrated to a target NAS device. Data migration between different NAS devices involves cutover. Cutover means switching a NAS device connected to the client from the source NAS device to the target NAS device and starting to use the NAS device to execute the service. During cutover, a connection between the client and the source NAS device needs to be disconnected, and a connection between the client and the target NAS device needs to be established. Because the client executes the service by accessing data in the NAS device, the service is interrupted during cutover. To ensure service continuity, duration of a cutover period needs to be as short as possible. The duration of the cutover period may also be referred to as cutover duration.

In a solution A1, a process of migrating the data in the source NAS device to the target NAS device is divided into two phases. In a first phase, the client maintains the connection to the source NAS device, and continues accessing the source NAS device to execute the service. In a second phase, cutover is performed. During cutover, incremental data generated by the client during data migration needs to be scanned in the source NAS device, and then the incremental data is migrated to the target NAS device. Incremental data scanning takes a long time, especially when the client is busy and an amount of incremental data is large. Consequently, incremental data scanning may take several hours. Because incremental data scanning takes a long time, the cutover duration is prolonged, and the service continuity is severely affected.

In a solution A2, in a data migration process, the service of the client is stopped, and the connection between the client and the source NAS device is disconnected. Then, the client is connected to the target NAS device, and the service of the client is started. The client continues to execute the service by accessing the target NAS device. In comparison with the solution A1, the solution A2 shortens the cutover duration. However, in the solution A2, the service of the client needs to be restarted, and specific cutover duration also exists. Therefore, the service continuity is also poor.

Embodiments of this application provide a data access method. In the method, in a process of migrating data from a source storage device to a target storage device, the client can access, based on a file handle (file handle) of a source file in the source storage device, a copy file of the source file in the target storage device, so that the client can access the copy file in the target storage device without applying to the target storage device for a file handle of the copy file. Therefore, the client does not need to restart the service, and the client does not need to be shut down (that is, has zero downtime), to greatly reduce the cutover duration, make the cutover duration less than 1 minute, and ensure the service continuity. That is, the service continuity is almost not affected by data migration.

The source file is a file in the source storage device, and the copy file is obtained by copying the source file. Data migration means copying the source file in the source storage device to obtain the copy file, and sending the copy file to the target storage device. In addition, the file handle may be briefly referred to as a handle.

The following describes in detail the data access method provided in embodiments of this application.

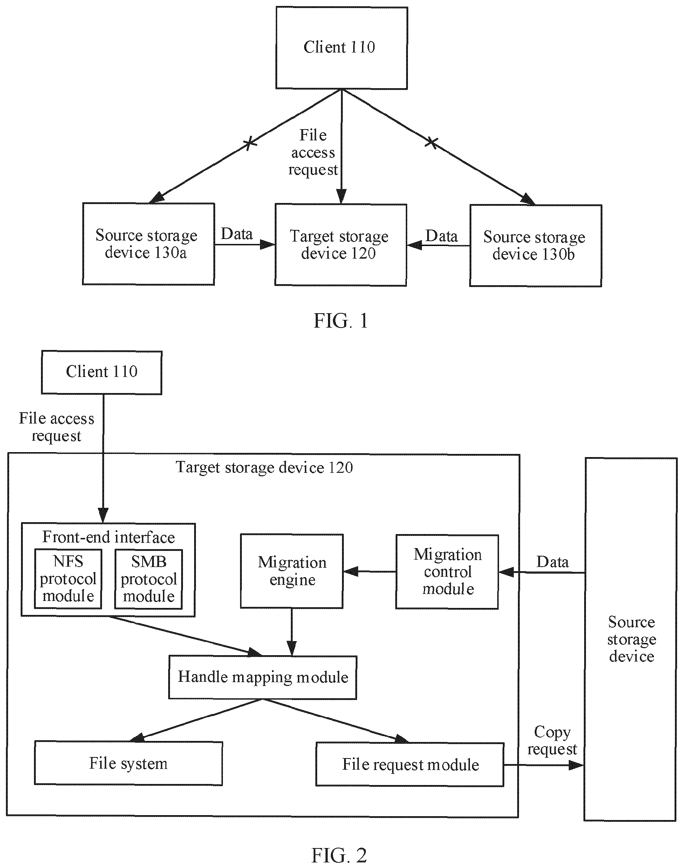

FIG. 1 shows an architecture to which the data access method provided in embodiments of this application is applicable. The architecture may include a client 110, a target storage device 120, and at least one source storage device. The at least one source storage device may include a source storage device 130a, a source storage device 130b, and/or the like. In the following descriptions, when the source storage device and the target storage device are not specifically distinguished, the source storage device and the target storage device may be referred to as storage devices for short.

The client and the storage device, and different storage devices may be connected via a network. In some embodiments, the network may be a wide area network (wide area network, WAN), for example, an internet (internet). In some embodiments, the network may be a local area network (local area network, LAN), for example, an enterprise network.

The client 110 is an apparatus or a device having a data processing capability. In some embodiments, the client 110 may be a physical computing device, for example, a server or a terminal. In some embodiments, the client 110 may be a virtual computing device, for example, a virtual machine (virtual machine, VM) or a container (container). A specific implementation of the client 110 is not specifically limited in embodiments of this application.

One or more applications (applications, APPs) may be installed on the client 110. The application corresponds to one or more services, for example, services such as three-dimensional (three-dimensional, 3D) model rendering and video editing. The client 110 may execute a program of an application to execute a service corresponding to the application.

The client 110 may access data in the storage device to execute a service. Specifically, a service of three-dimensional model rendering is used as an example. The client 110 may read, from the storage device, graphics data used for model rendering, and perform model rendering based on the read graphics data.

The client 110 may access the data in the storage device by sending a file access request to the storage device. The file access request is used to request to perform one or more operations on a file. The operation may be a read operation, a write operation, or the like.

The client 110 may access the data in the storage device according to one or more network protocols. In some embodiments, the client 110 may access the data in the storage device according to a network file system (network file system, NFS) protocol or a server message block (server message block, SMB) protocol. In some embodiments, a plurality of applications are installed on the client 110. When executing a service of one application, the client 110 may access the storage device according to the NFS protocol, and when executing a service of another application, the client 110 may access the storage device according to the NFS protocol or the SMB protocol.

The storage device is a device having a data storage capability. A file system (file system) is deployed on the storage device, and may store and manage a file (file) and metadata of the file. The metadata of the file is also referred to as description information of the file, and is used to describe information such as a feature and an attribute of the file. The metadata of the file may include a file handle of the file, lock information of the file, a user to which the file belongs, and the like.

In some embodiments, the storage device may be specifically a NAS device. The storage device may include a plurality of memories configured to store data, for example, a disk (disk). The plurality of memories may be non-volatile memories. For example, the plurality of memories may form a storage array. Data may be stored in two or more memories in segments. When the data is accessed, the two or more memories may be concurrently accessed, to improve data access efficiency. For example, the file system deployed on the storage device may be a distributed file system, and concurrent access to a plurality of memories may be implemented by using the distributed file system.

In some embodiments, the storage device is deployed on a cloud. A cloud vendor may provide a data storage service for one or more users by using the storage device.

The source storage device is a source end of data migration. In other words, data in the source storage device is migrated to another storage device. The target storage device is a destination end of data migration. In other words, the data in the source storage device is migrated to the target storage device. In short, data migration means migrating the data in the source storage device to the target storage device.

In some embodiments, according to the data access method provided in embodiments of this application, data in a plurality of source storage devices may be concurrently migrated to a same target storage device, or data in a same source storage device may be concurrently migrated to a plurality of target storage devices, to improve data migration efficiency.

In some embodiments, the source storage device and the target storage device may belong to a same cloud vendor, or may belong to different cloud vendors.

The data access method provided in embodiments of this application is mainly performed by the target storage device. Next, a possible software structure of the target storage device is described by using an example.

Refer to FIG. 2. The target storage device 120 includes a migration engine and a migration control module. The migration engine is configured to execute a data migration task, in other words, configured to migrate the data in the source storage device to the target storage device 120. The migration control module is configured to control the migration engine to execute the data migration task. For example, the migration control module may control the migration engine to start to execute the migration task, suspend the migration task, terminate the migration task, and the like.

The target storage device 120 may include a front-end interface. The front-end interface is used by the client 110 to access the target storage device 120. Specifically, the front-end interface may receive the file access request that is sent by the client 110 and that is used to access a file in the target storage device 120. The client 110 may send the file access request to the front-end interface in a form of a network packet. The front-end interface may parse the network packet to obtain the file access request. In some embodiments, the front-end interface may include a plurality of network protocol modules, for example, an NFS protocol module and an SMB protocol module. The network protocol module is configured to parse a corresponding network packet to obtain the file access request. For example, it may be assumed that the client 110 sends the file access request to the front-end interface according to the NFS protocol, in other words, the file access request is carried in an NFS protocol packet. After the front-end interface receives the NFS protocol packet, the NFS protocol module may parse the NFS protocol packet to obtain the file access request.

The target storage device 120 further includes a handle mapping module, a file system, and a file request module. The handle mapping module may create a handle mapping list, forward the data from the source storage device to the file system, and forward the access request from the client to the file system or a unified client based on the handle mapping list. Details are as follows.

The migration engine sends the data migrated from the source storage device to the handle mapping module. The data includes at least one file and a file handle of a source file of the file.

The file handle is an identifier of the file, and one file handle represents one file. File handles of the file vary with devices in which the file is located. More specifically, when the file is migrated from the source storage device or copied to the target storage device, the target storage device allocates a new file handle to the file, to identify the file in the target storage device. For ease of description, the file in the source storage device may be referred to as a source file, and a file received by the target storage device may be referred to as a copy file of the source file. The data migrated from the source storage device may include at least one copy file and a file handle of a source file of the at least one copy file. In addition, the copy file is a copy of the source file, and content of the copy file is the same as that of the source file. A file handle of the source file may be understood as an identifier of the copy file in another storage device before the copy file is copied to the target storage device.

When a file reaches a device, an operating system (operating system, OS) of the device allocates a file handle to the file to identify the file. In other words, when the copy file reaches the target storage device 120, a file handle is allocated to the copy file. The file handle allocated by the target storage device 120 to the copy file may be referred to as a file handle of the copy file. The handle mapping module may obtain the file handle of the copy file, then establish a correspondence between the file handle of the copy file and the file handle of the source file of the copy file, and record the correspondence in the handle mapping list. In some embodiments, the handle mapping list may be implemented as a table, and the handle mapping list may be referred to as a handle mapping table.

The handle mapping module may buffer the handle mapping list, or may persistently store the handle mapping list. For example, the handle mapping module may send the handle mapping list to the file system, and store the handle mapping list in a non-volatile memory of the target storage device 120 by using the file system.

The handle mapping module may further forward the copy file to the file system. The file system may store the copy file in a memory of the target storage device 120. In some embodiments, the target storage device 120 includes a storage array, and the file system may be a distributed file system. The copy file may be divided into a plurality of pieces of segmented data by using the file system, and different pieces of segmented data are concurrently written into different memories in the storage array, to implement efficient data writing.

The front-end interface may forward the file access request from the client to the handle mapping module. The file access request includes the file handle of the source file. Specifically, when the client 110 needs to access a file, the client 110 may include a file handle of the file in the file access request. In embodiments of this application, the client 110 and the application on the client 110 do not need to be restarted, and a file handle held by the client 110 is a file handle of the file in the source storage device, that is, the file handle of the source file. Therefore, a file handle carried in the file access request is the file handle of the source file.

The handle mapping module may obtain the file handle of the source file from the file access request, and query the handle mapping list for the file handle of the copy file corresponding to the file handle of the source file.

If the file handle of the copy file corresponding to the file handle of the source file is found in the handle mapping list, it indicates that the copy file of the source file has reached the target storage device 120. In this case, the handle mapping list may forward the file access request and the file handle of the copy file to the file system. In response to the file access request, the file system may perform, on the copy file based on the file handle of the copy file, an operation requested by using the file access request, so that the client 110 accesses the file. For example, if the file access request is a read operation, the file system may read the copy file, and send the read file to the client 110. The copy file, that is, the read file, is a copy of a file identified by a file handle in the file access request. Sending the read copy file to the client 110 is equivalent to sending the source file to the client 110, so that the client 110 can access the file.

If the file handle of the copy file corresponding to the file handle of the source file is not found in the handle mapping list, it indicates that a file requested to be accessed by the file access request has not been migrated from the source storage device to the target storage device 120. The handle mapping module may send the file access request or the file handle in the file access request to the file request module.

The file request module may send a copy request to the source storage device based on the file handle in the file access request. The copy request includes the file handle. In response to the copy request, the source storage device may send the copy file of the source file identified by the file handle to the target storage module 120. After receiving the copy file, the target storage device 120 may allocate a file handle to the copy file. The handle mapping module may establish a correspondence between the file handle of the copy file and the file handle in the file access request, and record the correspondence in the handle mapping list. The handle mapping module forwards the copy file to the file system, to store the copy file in the memory of the target storage device 120. Then, the handle mapping list may forward the file access request and the file handle of the copy file to the file system. In response to the file access request, the file system may perform, on the copy file based on the file handle of the copy file, the operation requested by using the file access request, so that the client 110 accesses the file.

In some embodiments, the file request module may provide an application programming interface (application programming interface, API) for the handle mapping module, and the handle mapping module may invoke the API to send the file access request or the file handle to the file request module. The file request module may send the copy request to the source target storage device in the form of a network packet. In an example, the network packet may be the NFS protocol packet or the SMB protocol packet.

In some embodiments, the file request module may further send the file access request to the source storage device, so that the source storage device processes the file access request, in other words, in response to the file access request, the source storage device accesses the file identified by the file handle in the file access request. Because the file identified by the file handle in the file access request is the file in the source storage device, in response to the file access request, the source storage device may access the file identified by the file handle in the file access request. In this way, when an exception occurs when the target storage device accesses the copy file stored in the target storage device (for example, the source storage device is incompatible with the target storage device, and consequently, after the data in the source storage device is copied to the target storage device, the target storage device cannot normally access the data), the file access request may be forwarded to the source storage device, so that the source storage device processes the file access request and accesses the source file, to meet a file access requirement of the client.

The foregoing example describes the software structure of the target storage device. With reference to the content described above, the following uses the target storage device 120, the source storage device 130a, and the client 110 as an example to describe an execution procedure of the data access method provided in embodiments of this application.

Before data migration, some preparations need to be made.

In some embodiments, the preparations may include configuring tenant information in the target storage device. The source storage device 130a may provide a storage service for one or more tenants, and the target storage device 120 is also expected to provide a storage service for the one or more tenants. Therefore, the tenant information in the target storage device needs to be configured. Details are as follows.

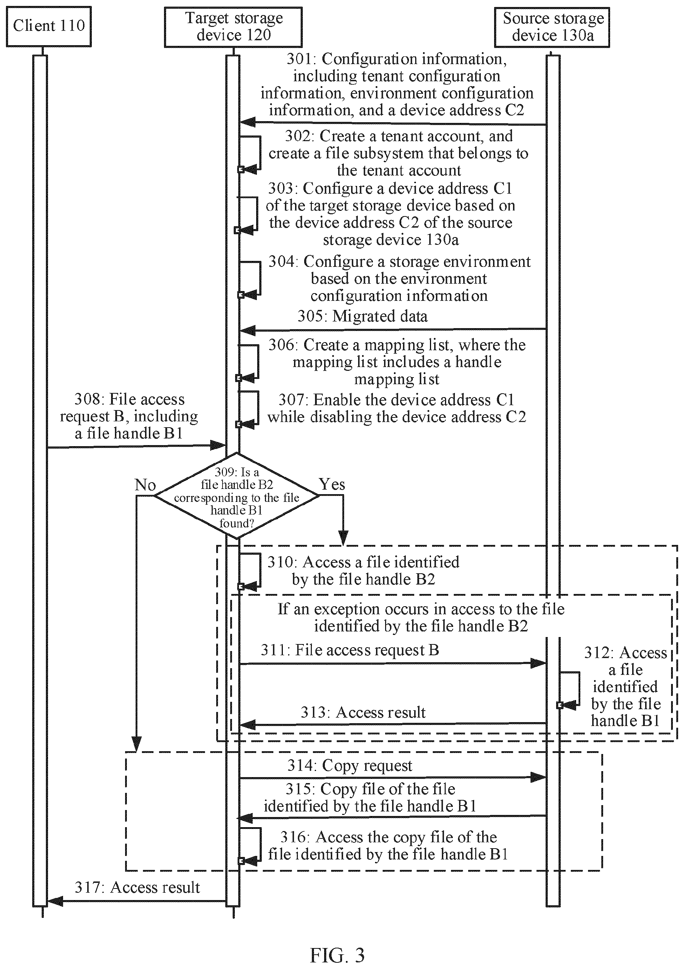

Refer to FIG. 3. A target storage device 120 may perform step 301, to obtain configuration information from a source storage device 130a. The configuration information includes tenant configuration information. In some embodiments, after the target storage device 120 is connected to the source storage device 130a, the target storage device 120 may automatically collect the configuration information, that is, automatically perform step 301.

In some embodiments, the tenant configuration information may include user information (for example, a user ID), information about a user group (for example, an ID of the user group), information about a shared object (for example, an ID of the shared object), and the like. A tenant represents an organization, and a member in the organization is referred to as a user. The user information is information about a user in the tenant. The tenant is represented by using a tenant account, and the user in the tenant is a user account under the tenant account. The user information includes a mapping relationship between the user account, a tenant to which the user belongs, and different user identifiers of the user. One or more users in one tenant may form a user group, and the information about the user group includes a user included in the user group.

A file in a storage device belongs to a tenant. More specifically, the file belongs to a user in the tenant.

The shared object is an authorized user who can access a file. In other words, the file can allow access of a shared user of the file, and rejects access of a user other than the shared user. During access to a file, a file access request carries a user identifier, and a file system may determine whether a user identified by the user identifier belongs to a shared object of a file that the file access request requests to access. If the user identified by the user identifier belongs to the shared object of the file that the file access request requests to access, the access is allowed. If the user identified by the user identifier does not belong to the shared object of the file that the file access request requests to access, the access is rejected.

Still refer to FIG. 3. The target storage device 120 may perform step 302, to create a tenant account, and create a file subsystem that belongs to the tenant account. Based on the tenant configuration information obtained in step 301, the target storage device 120 may create a tenant account in a file system of the target storage device 120, and create a user account under the tenant account. When one or more users belong to one user group, the target storage device 120 may create the user group, and establish and record a belonging relationship between the user and the user group.

The target storage device 120 may create, in the file system of the target storage device 120, a file subsystem that belongs to the tenant account. The file subsystem is configured to store and manage a file of the tenant. For example, when receiving a file, the file subsystem identifies a specific user that is in the tenant and to which the file belongs, and records a belonging relationship between the file and the user.

A same user may have different user identifiers. For example, a user identifier of a user in an NFS protocol may be different from a user identifier of the user in an SMB protocol. Therefore, a user identifier mapping relationship between different user identifiers of a same user needs to be established, to indicate that these user identifiers represent the same user, so that the file subsystem can determine whether a user is a shared object of a file, and store the file under a correct user account. A user identifier mapping relationship that may be established by the target storage device 120 is the same as a user identifier mapping relationship in the source storage device 130a. For example, as described above, the tenant configuration information includes the mapping relationship between different user identifiers of the user, and the target storage device 120 may convert the mapping relationship between different user identifiers of the user in the tenant configuration information to a mapping relationship between different user identifiers of a user that are suitable for use and storage of the target storage device 120, to complete establishment.

In some embodiments, the file subsystem may be specifically implemented as an external device file system (external device file system, eDev FS). In some embodiments, the target storage device 120 may set a working mode of the file subsystem to a takeover first mode. The takeover first mode means that when both a file access request and a to-be-stored file are received, the file access request is preferentially processed, and then the file is stored, so that it can be ensured that a service of a client can be executed in time.

In some embodiments, the preparations before data migration may further include configuring a storage environment. After a file is migrated from the source storage device to the target storage device 120, to ensure that the target storage device 120 can normally process access to the file migrated from the source storage device 130a, the target storage device 120 may store the migrated file in a storage environment consistent with or close to a storage environment of the source storage device 130a. Therefore, the configuration information obtained in step 301 may be environment configuration information. The environment configuration information is used to represent or describe the storage environment of the source storage device 130a. The storage environment may include one or any combination of a lightweight directory access protocol (lightweight directory access protocol, LDAP) domain, a network information service (network information service, NIS) domain, and an active directory (active directory, AD) domain.

The target storage device 120 may perform step 304, to configure the storage environment based on the environment configuration information. In an example, the environment configuration information may include information about the LDAP domain. In step 304, the target storage device 120 may configure an LDAP domain of the target storage device 120 based on the information about the LDAP domain. In an example, the environment configuration information may include information about the NIS domain. In step 304, the target storage device 120 may configure a NIS domain of the target storage device 120 based on the information about the NIS domain. In an example, the environment configuration information may include information about the AD domain. In step 304, the target storage device 120 may configure an AD domain of the target storage device 120 based on the information about the AD domain.

In some embodiments, the preparations before data migration may further include configuring a device address C1 of the target storage device. The device address C1 may also be referred to as a front-end address of the target storage device 120, and is an address used by the client to access the target storage device 120. More specifically, the target storage device 120 is connected to the client through a network based on the device address C1, to receive the file access request from the client, and implement the access to the file. In an example, the device address C1 may be specifically an internet protocol (internet protocol, IP) address.

The device address C1 may be configured based on a device address C2 of a source storage device 130.

The configuration information obtained in step 301 may include the device address C1 of the source storage device 130a. The device address C2 is a front-end address of the source storage device 130a, and is an address used by the client to access the source storage device 130a.

The target storage device 120 performs step 303, to configure the device address C1 of the target storage device based on the device address C2 of the source storage device 130a. The device address C1 may be configured as an address the same as the device address C2 of the source storage device 130. The device address C2 is the same as the device address C1. When a storage device connected to the client is switched from the source storage device 130a to the target storage device 120, it only needs to disable the device address C2 and enable the device address C1. For the client, a device address connected to the client remains unchanged, and a network connection does not need to be re-established. In other words, when the storage device is switched, the client does not need to be re-mounted, to reduce cutover duration, and further ensure continuity of the service executed by the client. Before the storage device is switched, the device address C1 is in a disabled state, and the device address C2 is in an enabled state. The disabled state is an unused state, and may be a forbidden state or a sleep state. A network connection between a device address in the disabled state and the client cannot be established. The enabled state is a used state. A network connection between a device address in the enabled state and the client can be established.

The preparations before data migration can be completed in the foregoing manner. Then, data migration may be started.

The target storage device 120 performs step 305, to receive the migrated data from the source storage device 130a. The migrated data is data to be migrated during data migration. In other words, the migrated data is data sent from the source storage device to the target storage device. The target storage device 120 may obtain a back-end address of the source storage device 130a. The back-end address of the source storage device is an address for connecting to another storage device (for example, the target storage device 120). The source storage device sends, to the target storage device 120 based on the back-end address, data that needs to be migrated. In an example, the back-end address may include a plurality of IP addresses, and the plurality of IP addresses form an IP list.

After obtaining the back-end address of the source storage device 130a, the target storage device 120 may be connected to the source storage device 130a based on the back-end address, to receive the data from the source storage device 130a.

Still refer to FIG. 3. The target storage device 306 may create a mapping list, where the mapping list includes a handle mapping list.

The migrated data received in step 305 includes a file and a file handle. As described above, the file (that is, a migrated file) in the migrated data is a copy file of a source file in the source storage device 130a. After receiving the copy file, the target storage device 120 allocates a file handle to the copy file. In addition to the migrated file, the migrated data further includes the handle. The file handle in the migrated data is a file handle of a source file of the copy file in the source storage device 130a. In other words, a file identified by the file handle in the migrated data is the source file located in the source storage device 130a.

Step 306: Establish a correspondence between the file handle of the copy file and the file handle of the source file of the copy file, and record the correspondence in the handle mapping list.

The copy file is a file copied from the source storage device or migrated to the target storage device, and the source file is a file located in the source storage device. The copy file is obtained by copying the source file.

The target storage device 120 may store the copy file in the file system of the target storage device 120. In some embodiments, a plurality of file systems may be deployed on the target storage device 120, and the target storage device 120 may receive migrated data from a plurality of source storage devices. Different file systems may be respectively configured to store files from different source storage devices. For example, a file system D1 of the target storage device 120 is configured to store a file from the source storage device 130a, and a file system D2 of the target storage device 120 may be configured to store a file from the source storage device 130b. In step 306, the target storage device 120 may establish a correspondence between the file system and the source storage device, and record the correspondence in a file system mapping list. The correspondence between the file system and the source storage device may be specifically a correspondence between a file system identification (file system identification, FSID) of the target storage device 120 and a file system identification of the source storage device. The migrated data may further include the file system identification of the source storage device. When storing the file in the migrated data, the target storage device 120 may query the file system mapping list for a file system identification corresponding to the file system identification of the source storage device in the migrated data, and store a file in a file system identified by the found file system identification, to improve file storage efficiency.

In some embodiments, the copy file may be a file that belongs to a tenant, and the migrated data may include an identifier of the tenant to which the copy file belongs. The target storage system 120 may deliver the copy file to a file subsystem corresponding to the tenant, and the file subsystem corresponding to the tenant stores and manages the copy file. In an example, the copy file may belong to a user in the tenant, and the file subsystem may store the copy file under a user account of the user to which the copy file belongs. The tenant to which the copy file belongs is a tenant to which the source file of the copy file belongs, and the user to which the copy file belongs is a user to which the source file belongs.

In some embodiments, the target storage device 120 may establish a correspondence between a directory in which the copy file is located and a directory in which the source file of the copy file is located, and record the correspondence in a directory mapping list. The migrated data may include the directory in which the source file of the copy file is located, and the target storage device 120 may obtain a directory in which the copy file is located in the target storage device 120. In this way, the target storage device 120 may establish the correspondence between the directory in which the copy file is located and the directory in which the source file of the copy file is located. The directory mapping list can improve file access efficiency. Details are described below.

The handle mapping list, the file system mapping list, and the directory mapping list that are created above may be persistently stored. Specifically, the target storage device 12 stores the handle mapping list, the file system mapping list, and the directory mapping list in a non-volatile memory (for example, a magnetic disk or a solid-state drive).

In some embodiments, as described above, the target storage device 120 may obtain the file handle of the file in the source storage device 130a. The file handle of the file in the source storage device 130a is allocated by the source storage device 130a, and may reflect some information about the source storage device 130a, for example, a manufacturer of the source storage device. The target storage device 120 may be further configured based on the information, to reduce a risk that the target storage device 120 is incompatible with data in the source storage device 130a.

In some embodiments, if the source file in the source storage device is in a locked state, the target storage device 120 can also set the copy file of the file to a locked state. An owner (owner) of access permission for the copy file in the locked state is consistent with an owner of access permission for the source file in the locked state. The file in the locked state may reject an access operation performed on the file by an application other than the owner of the access permission. The access operation is an access operation restricted by the access permission. For example, the access permission herein includes permission to perform operations such as modification and deletion on the file. In other words, the file in the locked state accepts operations such as modification and deletion performed by the owner of the access permission, and rejects operations such as modification and deletion performed by another application. The owner of the access permission for the file in the locked state may be an application that triggers the file to enter the locked state.

In this embodiment, the file migrated to the target storage device may be restored to the locked state in the source storage device. In other words, the owner of the access permission for the file copied to the target storage device and in the locked state is consistent with the owner of the access permission for the source file in the locked state, so that the file copied to the target storage device does not need to be re-locked, to save time consumed for re-locking, and further ensure the service continuity.

The target storage device 120 may obtain lock information of the source file. The lock information is information generated when the source file enters the locked state. The lock information includes an identifier of the owner of the access permission for the source file in the locked state, and an identifier of a client on which the owner is located. The lock information may indicate that the file rejects access operations such as a modification operation and a deletion operation of the application other than the owner included in the lock information. The owner included in the lock information is an owner identified by the identifier of the owner in the lock information. The target storage device 120 may set, based on the lock information, the copy file of the source file to enter the locked state. A specific lock parameter of the locked state that the copy file enters is consistent with that of the locked state corresponding to the lock information. Specifically, the target storage device 120 sets the owner of the access permission for the copy file in the locked state to the owner included in the lock information, so that the owner of the access permission for the copy file in the locked state is consistent with the owner of the access permission for the source file in the locked state.

Network protocols between the client and the storage devices are different, and therefore manners in which the target storage device 120 obtains the lock information are different.

In an example, when a network protocol between the client and the storage device is the NFS protocol, the client may store lock information of a locked state triggered by an application on the client. In this case, the target storage device 120 may obtain the lock information from the client. Specifically, the target storage device 120 may obtain device information of the source storage device. For example, the target storage device 120 may obtain the device information of the source storage device in step 301. The device information is information used by a user client to identify the device. In an example, the device information may be in a device identifier. In the example, the device information may be an address used by the device to connect to the client. After the target storage device 120 and the client are connected through a network (which is described in detail below), the target storage device 120 may send the device information of the source storage device to the client, so that the client identifies the target storage device 120 as the source storage device, to send the lock information to a source storage device (actually the target storage device 120) identified by the client. Therefore, the target storage device 120 may obtain the lock information.

In an example, when a network protocol between the client and the storage device is the SMB protocol, the storage device may store the lock information. In this case, the target storage device 120 obtains the lock information from the source storage device. For example, the target storage device 120 may obtain the device information of the source storage device in step 301.

A connection between the client 110 and the source storage device 130a may be disconnected. In addition, the client 110 is connected to the target storage device 120, so that the storage device connected to the client 110 is switched from the source storage device 130a to the target storage device 120. In some embodiments, this process may be implemented in step 307. Details are as follows.

The target storage device 120 may perform step 307, to enable the device address C1 while disabling the device address C2. The device address C2 is disabled, the network connection between the client 110 and the source storage device 130a is disconnected, the device address C1 is enabled, and the client 110 is connected to the device address C1 for restoring the network connection, and is connected to the target storage device 120. In this manner, during storage device switching, a network connection re-establishment operation does not need to be performed, and it only needs a network connection restoration operation to implement storage device switching. In comparison with the network connection re-establishment operation, the network connection restoration operation saves operations such as exchanging a handshake message, and consumes less time. For the client 110, it is like that a temporary network fluctuation occurs, and the service only needs to be interrupted for a short time.

In step 306, the source storage device 130a may be manually triggered to disable the device address C2, and the target storage device 120 may be triggered to enable the device address C1.

In this way, the storage device connected to the client 110 may be switched from the source storage device 130a to the target storage device 120.

Still refer to FIG. 3. After the client 110 is connected to the target storage device 120, the client 110 may perform step 308, to send a file access request B. The file access request B2 may be specifically a file access request generated and sent by an application on the client 110. The file access request B includes a file handle B1. The file handle B1 is a file handle in the source storage device 130a. In other words, a file identified by the file handle B1 is a source file located in the source storage device 130a. In other words, the file handle B1 is not a file handle allocated by the target storage device 120 to a file, and the file identified by the file handle B1 is not in the target storage device 120.

Because the storage device connected to the client 110 has been switched to the target storage device 120, in step 308, the file access request B is sent to the target storage device 120. After receiving the file access request B, the target storage device 120 may perform step 309, to query the handle mapping list for a file handle corresponding to the file handle B1. For ease of description, the file handle corresponding to the file handle B1 may be referred to as a file handle B2. The file handle B2 is the file handle of the copy file of the source file identified by the file handle B1. In other words, the file handle B2 is the file handle allocated by the target storage device 120 to the copy file when the copy file of the source file identified by the file handle B1 is sent to the target storage device 120.

If a determining result of step 309 is yes, in other words, the file handle B2 is found in the handle mapping list, it indicates that the copy file of the source file identified by the file handle B1 has been migrated to the target storage device 120. In this way, in response to the file access request B1, the target storage device 120 may perform step 310, to access a file identified by the file handle B2. The file identified by the file handle B2 may also be referred to as a target file identified by the file handle B2, and is the copy file of the source file identified by the file handle B1. Therefore, access to the file identified by the file handle B2 is equivalent to access to the source file identified by the file handle B1, and an objective of sending the file access request by the client 110 can also be achieved.

In step 310, the file identified by the file handle B2 may be found, based on the file handle B2, in a file stored in the target storage device 120, and the file identified by the file handle B2 is further accessed. In some embodiments, the file access request B further includes a directory in which the source file identified by the file handle B1 is located. The directory mapping list may be queried for a directory in which the copy file is located and that corresponds to the directory in which the source file identified by the file handle B1 is located, and then the found directory in which the copy file is located is queried for the file identified by the file handle B2, so that the file identified by the file handle B2 can be quickly found.

In some embodiments, the target storage device 120 may determine whether access to the file identified by the file handle B2 is authorized, that is, may determine whether the file access request B is an authorized file access request. As described above, during data migration, the locked state may be synchronized. To be specific, if the source file is in the locked state, the copy file migrated to the target storage device 120 also enters the locked state, and the locked state of the source file is consistent with the locked state of the copy file. The target storage device 120 may detect whether a client that triggers the source file to enter the locked state is consistent with the client that sends the file access request B. That the clients are consistent means that identifiers of the clients are the same. The identifier of the client is information for distinguishing between different clients, and identifiers of different clients are different. The client that triggers the source file to enter the locked state is a client on which an application that triggers the source file to enter the locked state is located. The file access request B carries the identifier of the client that sends the file access request B, that is, an identifier of the client 110. As described above, the lock information obtained by the target storage device 120 includes the identifier of the client that triggers the file to enter the locked state. In this way, the target storage device 120 may obtain the identifier of the client that triggers the file identified by the file handle B1 to enter the locked state, and the identifier of the client that sends the file access request B. If the identifier of the client that triggers the file identified by the file handle B1 to enter the locked state is the same as the identifier of the client that sends the file access request B, it indicates that the client that triggers the file identified by the file handle B1 to enter the locked state is consistent with the client that sends the file access request B. If the identifier of the client that triggers the file identified by the file handle B1 to enter the locked state is different from the identifier of the client that sends the file access request B, it indicates that the client that triggers the file identified by the file handle B1 to enter the locked state is inconsistent with the client that sends the file access request B. When the client that triggers the file identified by the file handle B1 to enter the locked state is consistent with the client that sends the file access request B, it is determined that the access to the file identified by the file handle B2 is authorized. That is, the file access request B is an authorized file access request. When the client that triggers the file identified by the file handle B1 to enter the locked state is inconsistent with the client that sends the file access request B, it is determined that the access to the file identified by the file handle B2 is unauthorized. That is, the file access request B may be an unauthorized file access request. When the access to the file identified by the file handle B2 is unauthorized, the target storage device 120 may not access the file identified by the file handle B2, to avoid unauthorized access to the file and ensure information security.

After accessing the file identified by the file handle B2, the target storage device 120 may perform step 317, to return an access result to the client 110. For example, access requested by using the file access request B1 may be a read operation, and in this case, in step 317, the target storage device 120 may return read data to the client 110; access requested by using the file access request B1 may be a write operation, and in this case, in step 317, the target storage device 120 may return write result information to the client 110, where the write result information may indicate whether data is successfully written; and so on, and details are not listed herein one by one.

In some embodiments, an exception may occur when the target storage device 120 accesses the target file identified by the file handle B2. In an example, the file system of the target storage device 120 is incompatible with the file copied to the target storage device 120. Consequently, the target storage device 120 cannot access the target file identified by the file handle B2, and an exception occurs. For example, an operation requested by using the file access request B1 may be a read operation, and the target storage device 120 cannot read content of the target file identified by the file handle B2. For another example, an operation requested by using the file access request B1 may be a write operation, and the target storage device 120 cannot write content into the target file identified by the file handle B2. In an example, a fault that causes inability to access the target file identified by the file handle B2 may occur in the target storage device 120, and consequently an exception occurs.

In an example, when an exception occurs when the target storage device 120 accesses the target file identified by the file handle B2, the target storage device 120 may perform step 311, to send the file access request B to the source storage device 130a. When receiving the file access request B, the source storage device 130a may perform step 312, to access the file identified by the file handle B1. The file handle B1 is originally a file handle in the source storage device 130a, and the file identified by the file handle B1 is located in the source storage device 130a. Therefore, when receiving the file access request B, the source storage device 130a may directly find, based on the file handle B1, the file identified by the file handle B1, so that the file identified by the file handle B1 is accessed in time, and there is a low probability that an access exception occurs. In this way, the service continuity can be ensured when an exception occurs when the target storage device 120 accesses the file.

After the source storage device 130a accesses the file identified by the file handle B1, the source storage device 130a may send an access result to the target storage device 120 in step 313. When receiving the access result, the target storage device 120 may send the access result to the client 110 in step 317.

In an example, when an exception occurs when the target storage device 120 accesses the target file identified by the file handle B2, the target storage device 120 disables the device address C1, and the source storage device 130a re-enables the device address C2, so that the storage device connected to the client 110 is switched from the target storage device 120 to the source storage device 130a. Therefore, the client 110 may continue to execute the service by accessing the source storage device 130a, to ensure the service continuity. In addition, the file handle in the file access request sent by the client 110 is originally a file handle in the source storage device 130a, and the file identified by the file handle is located in the source storage device 130a. Therefore, when receiving the file access request, the source storage device 130a may directly find, based on the file handle, the file identified by the file handle, so that the file identified by the file handle is accessed in time, and there is a low probability that an access exception occurs. In this way, the service continuity can be ensured when an exception occurs when the target storage device 120 accesses the file.

In an example, another fault occurs in the target storage device 120, and consequently the target storage device 120 cannot normally process the file access request from the client. For example, hardware of the target storage device 120 is faulty or an exception occurs in an operating system, and consequently, the target storage device 120 cannot parse the file access request or cannot identify the file handle. In this case, the target storage device 120 disables the device address C1, and the source storage device 130a re-enables the device address C2, so that the storage device connected to the client 110 is switched from the target storage device 120 to the source storage device 130a. Therefore, the client 110 may continue to execute the service by accessing the source storage device 130a, to ensure the service continuity.

In an example, when the target storage device 120 is faulty, the target storage device 120 may send an alarm. When discovering the alarm, operation and maintenance personnel or another person may trigger the target storage device 120 to disable the device address C1, and trigger the source storage device 130a to re-enable the device address C2.

In some embodiments, even after all data that needs to be migrated in the source storage device is copied to the target storage device 120, the source storage device still stores the data and maintains a connection to the target storage device. When the target storage device 120 runs for a specific period of time and no exception (for example, a file access exception) occurs, the operation and maintenance personnel may determine that the target storage device 120 can completely take over the source storage device. In this case, the operation and maintenance personnel may indicate the target storage device 120 or the source storage device to disconnect the connection between the target storage device 120 and the source storage device. For example, the operation and maintenance personnel may indicate the source storage device to delete the data, for example, format a memory, to consume the data and ensure the information security.

In some embodiments, if a determining result of step 309 is no, in other words, the file handle B2 is not found in the handle mapping list, it indicates that the copy file of the source file identified by the file handle B1 has not been migrated to the target storage device 120. In this case, the target storage device 120 may perform step 314, to send a copy request to the source storage device 130a. When there are a plurality of source storage devices, the copy request may be sent to each source storage device in step 314. The copy request includes the file handle B1. The file identified by the file handle B1 is located in a source storage device to which the file handle B1 belongs (in other words, a source storage device that allocates the file handle B1). It may be set that the file handle B1 belongs to the source storage device 130a. In this case, the source storage device 130a may find, based on the file handle B1, the file identified by the file handle B1, and send, in step 315, the copy file of the file identified by the file handle B1 to the target storage device 120. The source storage device 130a does not need to send, in a default data migration sequence, the copy file of the file identified by the file handle B1 to the target storage device 120. In other words, the source storage device 130a may preferentially send the copy file of the file identified by the file handle B1 to the target storage device 120, and then continue to send the migrated data to the target storage device 120 in the default data migration sequence.

After receiving the copy file of the file identified by the file handle B1, the target storage device 120 may allocate a file handle to the copy file, where the file handle is the file handle B2. Then, a correspondence between the file handle B2 and the file handle B1 is established, and step 316 is performed, to access the copy file of the file identified by the file handle B1, that is, access the file identified by the file handle B2.

After accessing the file identified by the file handle B2, the target storage device 120 may perform step 317, to return an access result to the client 110. For details, refer to the foregoing descriptions. Details are not described herein again.

In the data access method provided in embodiments of this application, the client can access the copy file of the file in the target storage device based on the file handle of the file in the source storage device, without a need of restarting the client or the application on the client. In other words, the client can access the file in the target storage device with downtime of the client or the application being zero, to greatly reduce the cutover duration and ensure the service data continuity.

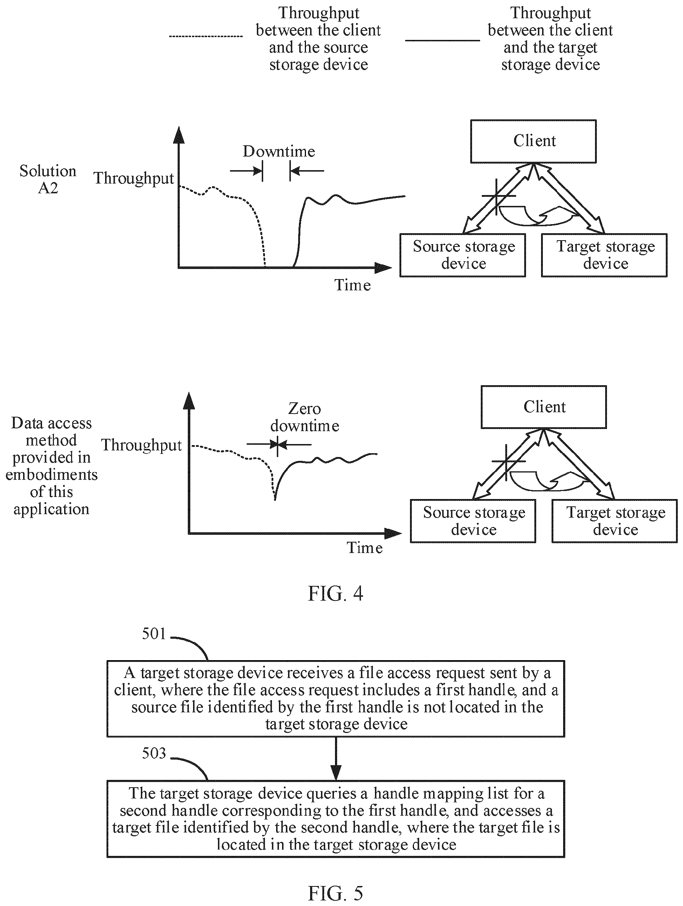

Downtime that can be achieved in the data access method provided in embodiments of this application may be shown in FIG. 4. The downtime is the downtime of the client or the application. It can be learned that, in the data access method provided in embodiments of this application, downtime of a client side or the application is zero, to greatly reduce the cutover duration and ensure the service data continuity.

Based on the data access method described above, an embodiment of this application provides another data access method. It may be understood that the method is another expression of the data access method described above, and the two methods are combined. For some or all content of the method, refer to the foregoing descriptions of the data access method.

The method may be performed by a target storage device. The target storage device may be a target storage device in a data migration scenario, for example, the target storage device 120. Refer to FIG. 5. The method includes the following steps.

Step 501: A target storage device receives a file access request sent by a client, where the file access request includes a first handle, and a source file identified by the first handle is not located in the target storage device. For details, refer to the foregoing descriptions of step 308 in FIG. 3. Details are not described herein again.

Step 503: The target storage device queries a handle mapping list for a second handle corresponding to the first handle, and accesses a target file identified by the second handle, where the target file is located in the target storage device. For details, refer to the foregoing descriptions of steps 309 and 310 in FIG. 3. Details are not described herein again.

In some embodiments, the first handle is an identifier of the target file in another storage device before the target file is copied to the target storage device. For details, refer to the foregoing descriptions of the file handle B1.

In some embodiments, the method further includes: When an exception occurs in access to the target file, the target storage device forwards the access request to a source storage device in which the source file is located, to access the source file. For details, refer to the foregoing descriptions of steps 311 to 313 in FIG. 3. Details are not described herein again.

In some embodiments, a device address of the target storage device is the same as a device address of a source storage device in which the source file is located, and the device address is used for access by the client. Before the target storage device receives the file access request, the method further includes: enabling the device address of the target storage device; and disabling the device address of the source storage device. For details, refer to the foregoing descriptions of step 307 in FIG. 3. Details are not described herein again.

In an example of this embodiment, when the target storage device is faulty, the method further includes: disabling the device address of the target storage device; and re-enabling the device address of the source storage device.

In another example of this embodiment, the method further includes: When an exception occurs in access to the target file, the target storage device disables the device address of the target storage device; and re-enables the device address of the source storage device.

In some embodiments, the method further includes: when the second handle does not exist in the handle mapping list, sending a copy request to the source storage device in which the source file is located, where the copy request includes the first handle, and the copy request is used to request the source storage device to copy the source file to the target storage device. For details, refer to the foregoing descriptions of step 314 to step 316 in FIG. 3. Details are not described herein again.

In some embodiments, the source file that is identified by the first handle and that is located in the source storage device is in a locked state. The method further includes: The target storage device sets the target file identified by the second handle to be in a locked state, where an owner of access permission for the target file in the locked state is consistent with an owner of access permission for the source file in the locked state. For details, refer to the foregoing descriptions of the locked state of the source file identified by the file handle B1 and the locked state of the target file identified by the file handle B1. Details are not described herein again.

In an example of this embodiment, that the target storage device sets the target file to be in the locked state includes: The target storage device obtains lock information generated when the source file enters the locked state; and the target storage device sets, based on the lock information, the target file to enter the locked state.

In an example of this embodiment, the method further includes: when it is detected that a client that triggers the source file to enter the locked state is consistent with the client that sends the access request, determining that the access to the target file is authorized.

In the data access method provided in embodiments of this application, the client can access a copy file of a file in the target storage device based on a file handle of the file in the source storage device, without a need of restarting the client or an application on the client. In other words, the client can access a file in the target storage device with downtime of the client or the application being zero, to greatly reduce cutover duration and ensure service data continuity.

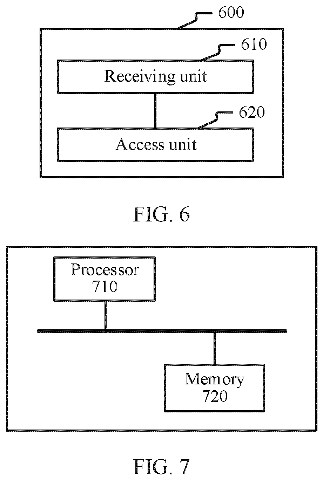

Refer to FIG. 6. An embodiment of this application further provides a data access apparatus 600. The apparatus 600 may be disposed in a target storage device, for example, a target storage device 120.

As shown in FIG. 6, the apparatus 600 includes:
a receiving unit 610, configured to receive a file access request sent by a client, where the file access request includes a first handle, and a source file identified by the first handle is not located in the target storage device; and
an access unit 620, configured to: query a handle mapping list for a second handle corresponding to the first handle, and access a target file identified by the second handle, where the target file is located in the target storage device.

For functions of the functional units of the apparatus 600, refer to the foregoing descriptions of the method embodiments shown in FIG. 5 or FIG. 3. Details are not described herein again.

An embodiment of this application provides a computing device 700. As shown in FIG. 7, the computing device 700 includes a processor 710 and a memory 720. The memory 720 is configured to store a file and an executable program. The processor 710 is configured to execute the executable program stored in the memory 720, so that the computing device 700 can perform the operations performed by the target storage device 120 in the embodiment shown in FIG. 3 or the data access method shown in FIG. 5.

An embodiment of this application further provides a computer program product including instructions. The computer program product may be software or a program product that includes instructions and that can run on a computing device or be stored in any usable medium. When the computer program product runs on the computing device, the computing device is enabled to perform the method shown in FIG. 5.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the method shown in FIG. 5.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions in embodiments of the present invention.

## Claims

1. A data access method, wherein the method comprises:
receiving, by a target storage device, a file access request sent by a client, wherein the file access request comprises a first handle, and a source file identified by the first handle is not located in the target storage device; and
querying, by the target storage device, a handle mapping list for a second handle corresponding to the first handle, and accessing a target file identified by the second handle, wherein the target file is located in the target storage device.

2. The data access method according to claim 1, wherein
the first handle is an identifier of the target file in another storage device before the target file is copied to the target storage device.

3. The method according to claim 1 or 2, wherein the method further comprises:
when an exception occurs in access to the target file, forwarding, by the target storage device, the access request to a source storage device in which the source file is located, to access the source file.

4. The method according to claim 1 or 2, wherein a device address of the target storage device is the same as a device address of a source storage device in which the source file is located, and the device address is used for access by the client; and
before the receiving, by a target storage device, the file access request, the method further comprises:
enabling the device address of the target storage device; and
disabling the device address of the source storage device.

5. The method according to claim 4, wherein when the target storage device is faulty, the method further comprises:
disabling the device address of the target storage device; and
re-enabling the device address of the source storage device.

6. The method according to claim 4, wherein the method further comprises:
when an exception occurs in access to the target file, disabling, by the target storage device, the device address of the target storage device; and
re-enabling the device address of the source storage device.

7. The method according to any one of claims 1 to 4, wherein the method further comprises:
when the second handle does not exist in the handle mapping list, sending a copy request to the source storage device in which the source file is located, wherein the copy request comprises the first handle, and the copy request is used to request the source storage device to copy the source file to the target storage device.

8. The method according to any one of claims 1 to 4, wherein the source file that is identified by the first handle and that is located in the source storage device is in a locked state, and the method further comprises:
setting, by the target storage device, the target file identified by the second handle to be in a locked state, wherein an owner of access permission for the target file in the locked state is consistent with an owner of access permission for the source file in the locked state.

9. The method according to claim 8, wherein the setting, by the target storage device, the target file to be in a locked state comprises:
obtaining, by the target storage device, lock information generated when the source file enters the locked state; and
setting, by the target storage device based on the lock information, the target file to enter the locked state.

10. The method according to claim 8 or 9, wherein the method further comprises: when it is detected that a client that triggers the source file to enter the locked state is consistent with the client that sends the access request, determining that the access to the target file is authorized.

11. A data access apparatus, disposed in a target storage device, wherein the apparatus comprises:
a receiving unit, configured to receive a file access request sent by a client, wherein the file access request comprises a first handle, and a source file identified by the first handle is not located in the target storage device; and
an access unit, configured to: query a handle mapping list for a second handle corresponding to the first handle, and access a target file identified by the second handle, wherein the target file is located in the target storage device.

12. The apparatus according to claim 11, wherein the apparatus further comprises:
a sending unit, configured to: when an exception occurs in access to the target file, forward the access request to a source storage device in which the source file is located, to access the source file.

13. The apparatus according to claim 11, wherein a device address of the target storage device is the same as a device address of a source storage device in which the source file is located, and the device address is used for access by the client; and the apparatus further comprises:
an enabling unit, configured to enable the device address of the target storage device.

14. The apparatus according to claim 13, wherein the apparatus further comprises: a disabling unit, configured to: when the target storage device is faulty, disable the device address of the target storage device.

15. The apparatus according to claim 13, wherein the apparatus further comprises:
a disabling unit, configured to: when an exception occurs in access to the target file, disable the device address of the target storage device.

16. The apparatus according to any one of claims 11 to 13, wherein the apparatus further comprises:
the sending unit, configured to: when the second handle does not exist in the handle mapping list, send a copy request to the source storage device in which the source file is located, wherein the copy request comprises the first handle, and the copy request is used to request the source storage device to copy the source file to the target storage device.

17. The apparatus according to any one of claims 11 to 13, wherein the source file that is identified by the first handle and that is located in the source storage device is in a locked state, and the apparatus further comprises:
a setting unit, configured to set the target file identified by the second handle to be in a locked state, wherein an owner of access permission for the target file in the locked state is consistent with an owner of access permission for the source file in the locked state.

18. A computing device, comprising:
a memory, configured to store an executable program; and
a processor, configured to run the executable program to perform the method according to any one of claims 1 to 10.

19. A computer-readable storage medium, comprising computer program instructions, wherein when the computer program instructions are executed by a computing device, the computing device performs the method according to any one of claims 1 to 10.

20. A computer program product comprising instructions, wherein when the instructions are run by a computer device, the computer device is enabled to perform the method according to any one of claims 1 to 10.
